Europäisches Patentamt

European Patent Office

Office européen des brevets

(19)

(11) EP 0 696 128 A2

(12) EUROPEAN PATENT APPLICATION

(43) Date of publication:
07.02.1996 Bulletin 1996/06

(51) Int. Cl.⁶: **H04N 1/00**

(21) Application number: 95201956.0

(22) Date of filing: 15.07.1995

(84) Designated Contracting States:
DE FR GB

(30) Priority: 29.07.1994 US 282667

(71) Applicant: EASTMAN KODAK COMPANY
Rochester, New York 14650-2201 (US)

(72) Inventors:
• Spaulding, Kevin Edward,
c/o Eastman Kodak Co.
Rochester, New York 14650-2201 (US)

• Ray, Lawrence A.,
c/o Eastman Kodak Co.
Rochester, New York 14650-2201 (US)
• Ellson, Richard N.,
c/o Eastman Kodak Co.
Rochester, New York 14650-2201 (US)

(74) Representative: Wagner, Karl H. et al
D-80538 München (DE)

(54) **Apparatus and method for viewing a halftone image**

(57)    Disclosed is an apparatus and associated method for viewing a printed halftone image with reduced visibility of the halftone pattern. The invention is implemented utilizing a demagnifier and/or blurring element that is positioned in the viewing path of the halftone image.

FIG. 2

## Description

### Cross-Reference To Related Applications

This disclosure is related to U.S. Patent Application Serial Number 174,097, filed December 28, 1993, by Lawrence Ray and Richard Ellson, and entitled "Method and Apparatus for Point-of-Sale Digital Halftoning Image Verification."

### Field of Invention

The present invention relates to the field of image display, with the particular emphasis on the use of an optical means to alter the spatial frequency content of halftone images to improve the perceived image quality.

### Background Of The Invention

Many services such as credit access are accomplished by providing information on cards, referred to herein as transaction cards. Examples of such cards are the familiar credit cards. Transaction cards are presented by a card holder at the location of a transaction, and services or credit is extended once the information on the card is validated. Transaction card fraud, and in particular credit card fraud, is a significant problem. There are various techniques for reducing the fraudulent use of transaction cards. One of these techniques encodes the digital image of the cardholder (see Lawrence A. Ray and Richard N. Ellson, "Method and Apparatus for Credit Card Verification", U.S. Patent 5,321,751, issued June 14, 1994) on the card's magnetic stripe or within an internal card microprocessor (as in smart cards). As the image is not visible on the card, the image information must be extracted, decoded and displayed to the salesperson in some form.

In order to display this image, it must be rendered in some manner such as on a video display or in a printed form. Many transaction locations have devices at the transaction point for printing transaction card receipts on demand instead of imprinting the embossed information on the card onto pre-printed transaction card receipt forms. The point-of-sale printer provides a means for many point-of-sale locations to display the image encoded on the card magnetic stripe. This approach is described in the Cross-Referenced U.S. Patent Application Serial No. 174,097.

Transaction point terminals, such as point-of-sale terminals, with automatic receipt printers typically use a dot-matrix printer. These printers are preferable as they are very inexpensive, and are able to print multiple copies with a single pass (e.g., one copy for each customer, merchant, and financial institution). Although the examples described here will incorporate this type of printer, the methods of the current invention are also suitable for other digital printing methods such as ink-jet or laser printing. The simple dot-matrix printers usually used for point-of-sale terminals typically have resolutions in the range of 100-200 dots/inch. Printers which are capable of printing graphics information are commonly known as "all pins addressable," and are assumed to be the class of transaction point printing device used for this invention. Many manufacturers, such as Ithaca Peripherals of Ithaca, New York, produce transaction point printers with this feature. An example of such a device is the Ithaca peripheral PcOS series. This printer emulates an IBM Proprinter through a printer driver.

Most digital printers which might be used with point-of-sale terminals, such as dot-matrix printers, ink-jet printers, or laser printers, produce a bi-level output (i.e. at any given image position, ink is either present or not). To produce continuous tone images with these devices, techniques known as digital halftoning can be used. In very simplistic terms, intermediate gray levels are achieved by modulating the number of pixels which are printed in a local region of the image. Common digital halftoning methods include error diffusion and ordered dither (see Digital Halftoning, by Ulichney, MIT Press, Cambridge, Mass., pp. 77-79, 127, 239-240). In particular, error diffusion is an adaptive method which requires moderately sophisticated data processing. Ordered dither is a simple process that is well suited to devices with very limited memory and processing capability. There are many types of halftone dot patterns which can be formed using the dither approach. Examples include clustered dot patterns, and Bayer patterns. One type of dither, known as blue-noise dither (see Sullivan and Ray, U.S. patent 5,214,517, May 25, 1993), is particularly attractive due to the fact that it minimizes the visibility of the associated halftone patterns. This invention is not limited to a particular method of digital halftoning as the choice for implementation will be made depending upon the processing power (memory and speed) of the transaction point device, the characteristics of the printer, as well as the level of acceptable image quality.

Although blue-noise dither and error diffusion halftoning methods work well for printers which have well-behaved output dots and a reasonable degree of dot placement accuracy, they may not be optimum for many of the inexpensive dot matrix printers. This is due to the fact that the dots tend to bleed beyond their pixel boundaries. In some cases a checkerboard pattern appears to be completely filled due to ink-bleeding. As a result, halftoning algorithms which produce dispersed dot patterns tend to have tone-scale distortion problems where the dots bleed together. For these cases, a clustered-dot dither pattern is superior because there are fewer isolated ink-free dots which are apt to be filled in from the bleeding of the ink dots. For the case of a dither matrix having a 4 x 4 grid, up to 17 gray-levels can be designed, although in actual practice, the number of gray levels is less than the potential. The size of the grid cell will correspond to the period of the halftone dot pattern. Therefore, for a 4 x 4 grid, the dominant frequency of the halftone pattern will be a factor of four less than the pixel frequency. With typical printer pixel frequencies this places a significant amount of energy at a frequency at which the eye is very sensitive. Another disadvantage is that the apparent resolution of the image is substantially reduced. However, the advantage of printing stability for systems which suffer from ink bleeding or significant levels of uncontrolled variation will often outweigh these disadvantages.

Because of the relatively low resolution typically associated with point-of-sale printers, it is particularly important that the printing system and viewing conditions be designed with the characteristics of the human visual system in mind. As noted above, one particular problem with the use of low-resolution output devices for halftone printing is the low spatial frequency of the resulting halftone patterns. With any halftoning technique, the dominant halftone frequency will be substantially lower than the pixel frequency. The human visual system is most sensitive to spatial frequencies in the range of 10 to 50 cycles/inch at normal viewing distances. For normal transaction point printers, the spatial frequencies of the halftone patterns will typically be in this range. As a result, the quality of the halftone images produced by these printers will be degraded by the visibility of the halftone patterns. Hence, there is a need to modify the apparent spatial frequency content of the conventional transaction point printing apparatus in order to improve the perceived image quality. One way to do this would be to use printers with a higher dot frequency. This is often impractical for low-cost transaction point systems. This invention describes a technique for solving this problem while still using the current low cost printers.

## Summary Of The Invention

The current invention describes a method and apparatus for improving the perceived quality of a halftone image at the point of sale. The halftone image is in either the form of a printed receipt or displayed on a video display unit. The present invention modifies the apparent spatial frequency content of the visual information in order to make it less visible for the human visual system. This is accomplished through the use of either one or a combination of lenses and diffusers placed in between the halftone image and the viewer. In addition, the apparatus can be configured to provide an adjustable and restricted region from which the image can be viewed.

More specifically there is provided an apparatus for viewing a halftone image with reduced visibility of the halftone pattern, comprising:

means for forming a halftone image; and

demagnifying means positioned for viewing the formed halftone image, so as to reduce the visibility of the halftone pattern.

Additionally there is disclosed a method for viewing a halftone image with reduced visibility of the halftone pattern comprising the steps of:

forming a halftone image; and

positioning a demagnifying means in the viewing path of the halftone image so as to reduce the visibility of the halftone pattern.

From the foregoing it can be seen that it is a primary object of the present invention to provide a technique for improving the viewablility of a halftone image.

It is another object of the present invention to provide an inexpensive and non-complex technique for offsetting the blurring effects of a printed halftone image.

These and other objects and advantages of the invention will become more apparent upon reading the following description in conjunction with the drawings, in which:

## Brief Description Of The Drawings

Figure 1 is a graph illustrating the effect of demagnification on the frequency content of a halftone image.

Figure 2 illustrates a first implementation of the present invention.

Figure 3 is a prior art diagram illustrating the functional characteristics of a demagnifying lens.

Figure 4 illustrates a variable positioning of the demagnifying lens.

Figure 5 illustrates a means for varying the position of the demagnifying lens.

Figure 6 is a graph illustrating the effect of image blurring on the frequency content of a halftone image.

Figure 7 illustrates a second implementation of the present invention.

Figure 8 illustrates a third implementation of the present invention.

## Detailed Description Of The Invention

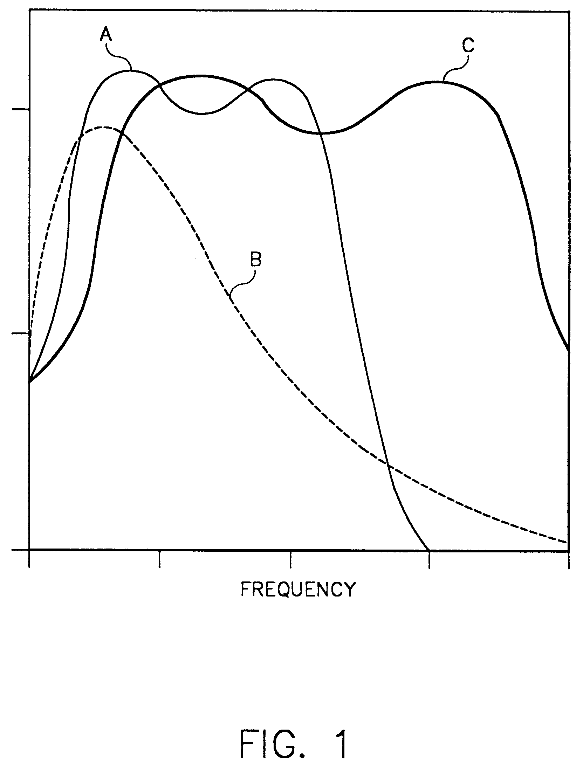

Referring to Figure 1, curve A illustrates the frequency spectrum of a typical halftone image. The frequency spectrum will contain contributions from both the image content as well as the halftone patterns used to form the image. Generally the halftone patterns will correspond to portions of the frequency spectrum which are higher in frequency than that of the image content. Schematically, this is shown by the two humps in curve A where the left hump is primarily due to the image content, and the right hump is primarily due to the halftone pattern. Curve B illustrates the response of the human visual system. It can be seen that both the image content as well as the halftone pattern are within the frequency range at which the observer is sensitive. One way to reduce the visibility of the halftone pattern for an image created on a receipt printer or a video display unit is to shift the frequency content to a higher frequency range by optically demagnifying the image. This will result in a scaling of the spatial frequency content of the image by a factor equal to the inverse of the demagnification factor. For example, if the image size were reduced by a factor of 0.5, the spatial frequency content would be shifted by a factor of 1/0.5=2.0. As a result, frequency content which was originally at 50 cycles/inch would now appear to be at l00 cycles/inch. Curve C shows the result of scaling the frequency content of Curve A by a factor of 2.0. It can be seen that the lobe of the curve corresponding to the frequency content of the halftone pattern is now in a frequency range where the human visual system is much less sensitive. As a result, the visibility of the halftone patterns will be substantially reduced.

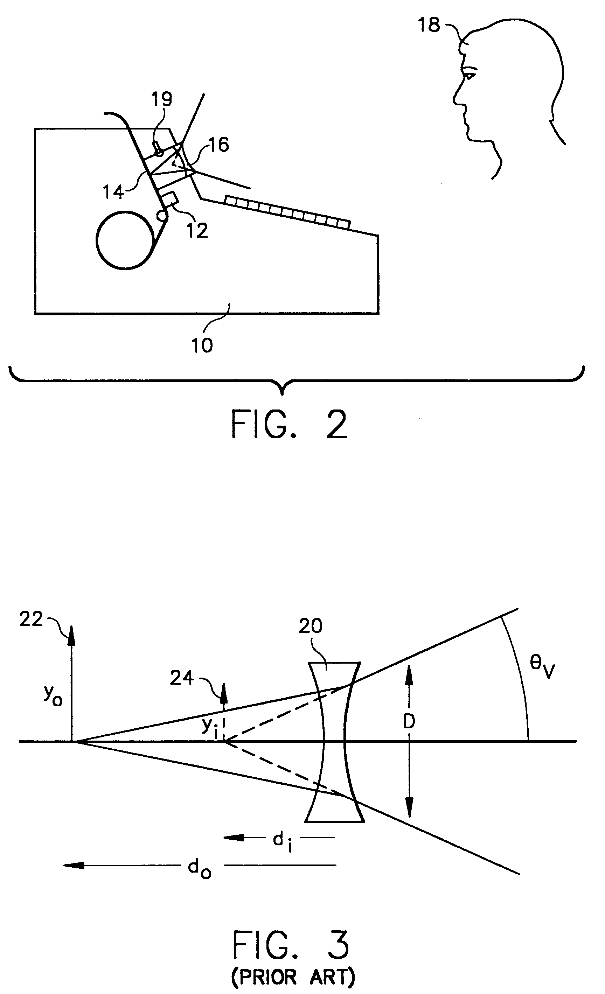

Figure 2 illustrates an embodiment of the present invention which utilizes a lens with a negative focal length to demagnify the halftone image. A point-of-sale terminal l0 contains a dot matrix printer apparatus 12. During the course of a transaction, an original image is printed on a receipt 14. A demagnifying lens 16 forms a virtual image of the receipt image. The virtual image will be demagnified relative to the receipt image. The observer l8 will view the virtual image which will have reduced visibility of the halftone patterns making up the receipt image. It may be desirable to provide a light source l9 to give uniform and bright illumination to the receipt image.

The demagnification factor associated with a negative focal length lens can be computed using standard first-order optical equations. With reference to Figure 3, a lens 20 with focal length f is used to image an object 22 of size $y_o$ a distance $d_o$ from the lens. A virtual image 24 is formed a distance $d_i$ from the lens with a size $y_i$. The distances $d_o$ and $d_i$ are measured relative to the lens position, with the sign convention that distances to the right are positive, and distances to the left are negative, so that in this case both distances are negative. The image distance $d_i$ can be determined from the lens equation:

$$\frac{1}{f} = \frac{1}{d_i} - \frac{1}{d_o}$$

The demagnification factor will be given by:

$$M = \frac{y_i}{Y_o} = \frac{d_i}{d_o} = \frac{f}{d_o + f}$$

For example, if the focal length f were -100mm, and the object distance $d_o$ was also -100mm, the image distance would be $d_i$ = -50mm, and the resulting demagnification factor would be M=0.5. This would result in shifting the frequency content of the image by a factor of 2.0 relative to the original object. If the lens 20 has a diameter D, the angular field-of-view for the system will be:

$$\theta_v = \tan^{-1}\left(\frac{D}{2 d_i}\right)$$

Having a narrow field-of-view may sometimes be a desirable feature for this type of system because in certain cases it may be advantageous to permit the image to be viewable only by the operator of the point-of-sale terminal. However, it would be inconvenient if it were only comfortable for an operator of average height to view the image. For this reason, it is desirable to permit adjustment of the nominal viewing angle. This is accomplished by permitting adjustment of the lens and/or receipt paper positions.

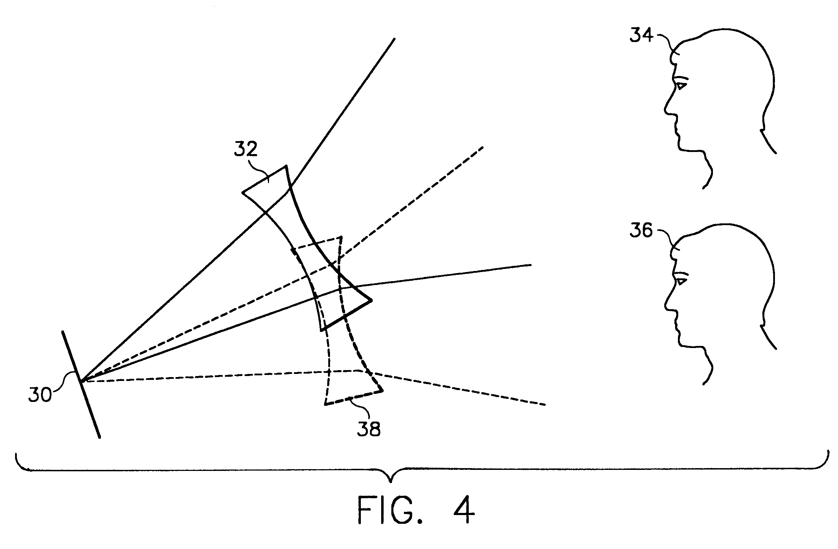

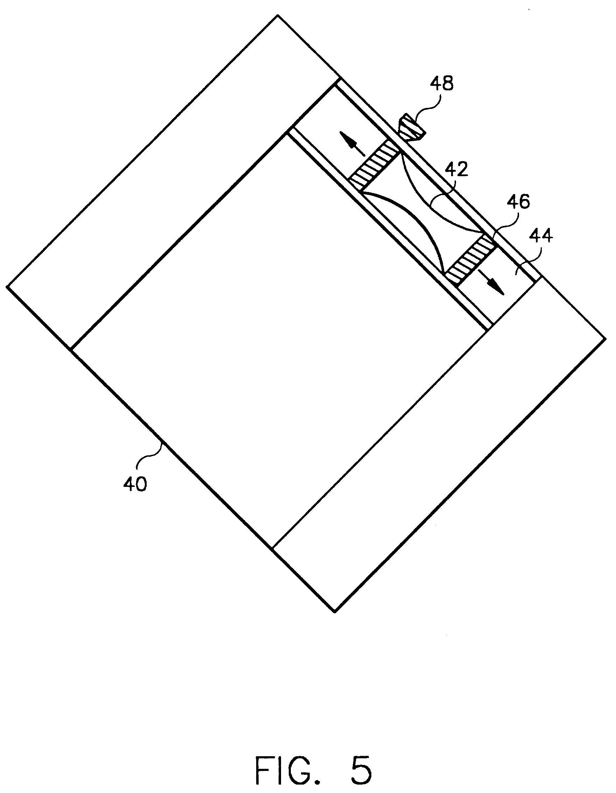

Figure 4 illustrates an embodiment of the present invention where the lens position is varied to adjust the viewing angle. In this case, the receipt image 30 is viewed through a demagnifying lens 32. The nominal lens position provides the correct viewing angle for an operator of average height 34. If a shorter operator 36 were to use the point-of-sale terminal, the lens position is adjusted to a new location 38 to provide a new nominal viewing angle. Many methods could be used to provide the adjustment of the lens and/or receipt paper to permit the adjustment of the nominal viewing angle. One such method is shown in Figure 5. For this example, the receipt paper 40 remains in a fixed position while the lens 42 is moved to provide the adjustment to the viewing angle. The lens is positioned in an adjustment slot 44 using a lens mount 46. The lens mount is designed so that it can slide back and forth within the adjustment slot. A handle can be attached to the lens mount to permit easy adjustment. The handle could additionally be designed to function as a locking mechanism. For example the handle could be threaded so that turning the handle would tighten a clamping mechanism. Other embodiments of this invention would include adjusting the position of the receipt image, or mounting the receipt lens assembly on a swivel mount to provide the viewing angle alteration.

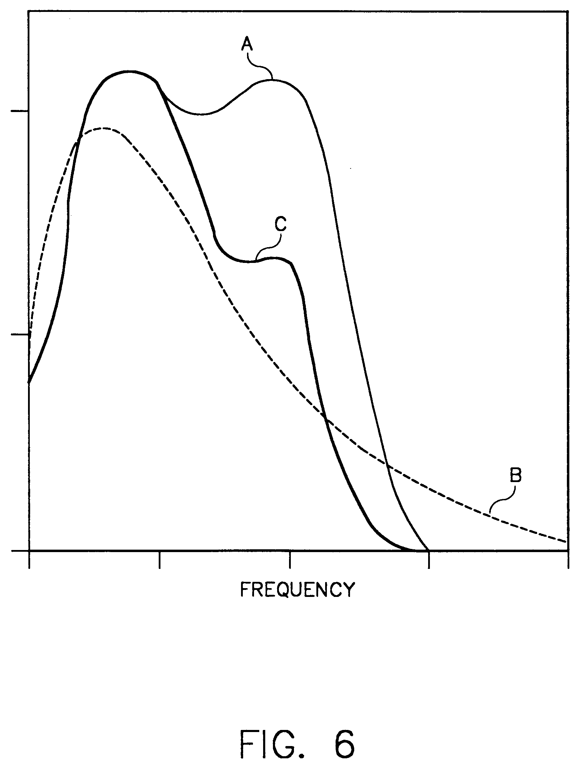

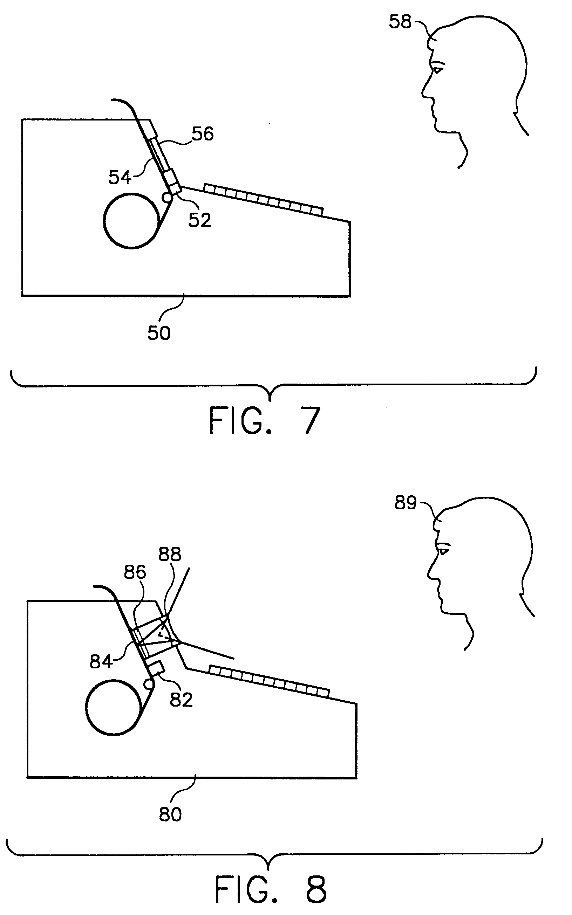

Instead of scaling the frequency content of the image by demagnifying it, another approach to minimizing the visibility of the halftone artifacts is to optically reduce the amplitude of the relevant frequencies. Effectively this blurs the halftone pattern so that the dots become less visible. This is illustrated in Figure 6. As in Figure 1, Curve A represents the frequency content of a halftone image, and Curve B represents the response of the human visual system. In this case Curve C represents a blurred version of Curve A. It can be seen that the amplitude of the frequency spectrum for the lobe containing the frequencies of the halftone pattern has been reduced so as to reduce the visibility of the halftone pattern. For example, if the frequency of the halftone pattern is 25 dots/inch, the dots could be blurred together by providing blur with a width of 0.04 inches. This could be accomplished by using a "poor quality" lens to image the receipt, or by using some kind of diffusing means to give the desired point spread function. Figure 7 shows a configuration of the present invention which uses a diffuser to provide the image blur. A point-of-sale terminal 50 contains a receipt printer 52 which forms an image on the receipt 54. A diffuser 56 is used to blur the image so that the visibility of the halftone pattern is reduced for the observer 58. The scattering properties of the diffuser, as well as the width of the gap between the receipt and the diffuser will determine the width of the blur function (point spread function). The viewing region can be adjusted for this case by recessing the image within the case of the point-of-sale terminal. This would effectively limit the viewing angle in which the observer could view the image. Analogous to the optical case shown in Figure 5, the nominal viewing angle could be adjusted by changing the position of the opening of the recess and/or the receipt paper.

It is also possible to combine the optical frequency scaling and diffusing concepts into a single configuration taking advantage of both effects. A diffuser could be used to blur the halftone pattern, and a demagnifier could be used to scale the frequency content of the image. Figure 8 shows a configuration of the present invention which uses both a demagnifying lens and a diffuser to reduce the visibility of the halftone pattern. A point-of-sale terminal 80 contains a receipt printer 82 which forms an image on the receipt 84. A diffuser 86 is used to blur the image and a lens 88 is used to demagnify the image so that the visibility of the halftone pattern is reduced for the observer 89.

## Parts List:

| | |
|---|---|
| 10 | Point-of-sale terminal |
| 12 | dot matrix printer apparatus |
| 14 | Receipt |
| 16 | Demagnifying lens |
| 18 | Observer |
| 19 | Light source |
| 20 | Lens |
| 22 | Object |
| 24 | Virtual image |
| 30 | Receipt image |
| 32 | Demagnifying lens |
| 34 | Operator (average height) |
| 36 | Operator (shorter) |
| 38 | New location |
| 40 | Receipt paper |
| 42 | Lens |
| 44 | Adjustment slot |
| 46 | Lens mount |
| 50 | Point-of-sale terminal |
| 52 | Receipt printer |
| 54 | Receipt |
| 56 | Diffuser |
| 58 | Observer |
| 80 | Point-of-sale terminal |
| 82 | Receipt printer |
| 84 | Receipt |
| 86 | Diffuser |
| 88 | Lens |
| 89 | Observer |

## Claims

1. A printing apparatus for viewing a printed halftone image with reduced visibility of the halftone pattern, comprising:

   printing means for receiving digitized halftone image signals for printing said image signals on a printing medium; and

   demagnifying means positioned for viewing the printed image, so as to reduce the visibility of the halftone pattern.

2. The apparatus according to Claim 1 wherein said printing means is a dot-matrix printer.

3. The apparatus according to Claim 1 wherein said printing means is an ink-jet printer.

4. The apparatus according to Claim 1 wherein said printing means is a laser printer.

5. The apparatus according to Claim 1 and further comprising:

   means for adjusting the position of the demagnifying means with respect to the printed image to accommodate viewing from a plurality of viewing positions.

6. A printing apparatus for viewing a printed halftone image with reduced visibility of the halftone pattern, comprising:

   printing means for receiving digitized halftone image signals for printing said image signals on a printing medium; and

   blurring means positioned for viewing the printed image, so as to reduce the visibility of the halftone pattern.

7. The apparatus according to Claim 6 wherein said blurring means is a diffuser.

8. A printing apparatus for viewing a printed halftone image with reduced visibility of the halftone pattern, comprising:

   printing means for receiving digitized halftone image signals for printing said image signals on a printing medium;

   demagnifying means;

   blurring means; and

   means for positioning said demagnifying means and said blurring means for viewing the printed image, so as to reduce the visibility of the halftone pattern.

9. An apparatus for viewing a halftone image with reduced visibility of the halftone pattern, comprising:

   means for forming a halftone image; and

   demagnifying means positioned for viewing the formed halftone image, so as to reduce the visibility of the halftone pattern.

10. An apparatus for viewing a halftone image with reduced visibility of the halftone pattern, comprising:

means for forming a halftone image; and

blurring means positioned for viewing the formed halftone image, so as to reduce the visibility of the halftone pattern.

A

C

B

FREQUENCY

FIG. 1

FIG. 2

FIG. 3
(PRIOR ART)

EP 0 696 128 A2

FIG. 4

FIG. 5

FIG. 6

FIG. 7

FIG. 8